# EUROPÄISCHE PATENTSCHRIFT

(11) **EP 2 878 610 B1**
(45) Veröffentlichungstag und Bekanntmachung des Hinweises auf die Patenterteilung: **08.03.2017**
(21) Anmeldenummer: 14194218.5
(22) Anmeldetag: 20.11.2014
(51) Int. Cl.: C08G 18/48, C08G 18/66, C08G 18/75, C08G 18/08, C08G 18/12, C09D 175/08, C08G 18/32, D21H 19/00

(54) **WÄSSRIGE, KATIONISCH STABILISIERTE POLYURETHANDISPERSIONEN, IHRE HERSTELLUNG UND VERWENDUNG IN BESCHICHTUNGSMITTELN**
AQUEOUS, CATIONICALLY STABILIZED POLYURETHANE DISPERSIONS, PREPARATION OF SAME AND USE AS COATING AGENTS
DISPERSIONS DE POLYURÉTHANE AQUEUSES, CATIONIQUES ET STABILISÉES, LEUR FABRICATION ET LEUR UTILISATION DANS DES PRODUITS DE REVÊTEMENT

(30) Priorität: 27.11.2013 DE 102013113134
(43) Veröffentlichungstag der Anmeldung: 03.06.2015
(73) Patentinhaber: SYNTHOPOL CHEMIE Dr. rer. pol. Koch GmbH & CO. KG, 21614 Buxtehude (DE)
(72) Erfinder: Spohnholz, Rüdiger, 22523 Hamburg (DE); Bullermann, Jasmin, 21073 Hamburg (DE)
(74) Vertreter: Müller Schupfner & Partner Patent- und Rechtsanwaltspartnerschaft mbB

(56) Entgegenhaltungen:
- US-A- 3 686 108

## Beschreibung

Die Erfindung betrifft wässrige, kationisch stabilisierte Polyurethandispersionen, deren Herstellung, deren Filme und deren Verwendung in wässrigen Beschichtungsmitteln.

Wässrige, anionisch stabilisierte Polyurethandispersionen bestehend aus einer lösungsmittelfreien oder lösungsmittelarmen Polyurethanbasis und einer meist lösungsmittelhaltigen, wasseremulgierbaren Härterkomponente, in den meisten Fällen auf Basis eines aliphatischen oder aromatischen Polyisocyanates, haben sich in den letzten 30 Jahren sehr gut als umweltfreundliche Alternative zu konventionellen lösungsmittelhaltigen Polyurethansystemen am Markt etabliert.

Die weiteren, technologisch möglichen Stabilisierungsformen für wässrige Polyurethandispersionen, nämlich nicht-ionogene und kationische Stabilisierung bzw. Kombinationen daraus sind zwar in der Literatur beschrieben, finden aber kaum eine praktische Bedeutung im Bereich des Farben- und Lack- sowie des Klebstoffmarktes.

Kationisch stabilisierte wässrige Polyurethandispersionen werden durch Einbau von tertiären Aminogruppen, vorzugsweise Aminoalkoholen in der Polymerhauptkette oder in der Seitenkette als funktionaler Building-Block stabilisiert. Im weiteren Verlauf der Polymersynthese werden die Aminogruppen durch Zugabe von anorganischen oder organischen Säuren protoniert bzw. mittels Alkylierungsmitteln quarternisiert.

In der DE 1495745 A1 und DE 2019324 A1 werden als kationische Monomere N,N'-Bis(hydroxy)alkylamine, bevorzugt Methyldiethanolamin eingesetzt. Dies bedeutet, dass das die Polyurethandispersion stabilisierende Stickstoffatom über die ethanolischen Substituenten in die Hauptkette des Polymers eingebaut wird. Es wird beobachtet, dass nicht alle Stickstoffverbindungen im Präpolymer nach Neutralisation in die entsprechenden Ammoniumgruppen überführt werden können und somit unwirksam als hydrophiler Bestandteil (der sich negativ auf Chemikalienbeständigkeiten auswirkt) im Polymer verbleiben.

Aus der US 3686108 A sind kationische Dispersionen von Polyuethanen mit quaternären Ammonium-Gruppen in der Seitenkette bekannt, welche unter Verwendung von 1,3-Polyolen mit jeweils zwei primären Hydroxyl-Gruppen hergestellt sind. Ein Bespiel hierfür ist 2-Ethyl-2-dimethylaminomethyl-propane-1,3-diol.

Ferner kann dies auch zu vermehrter Rückstandsbildung in den kationisch stabilisierten Polyurethandispersionen führen.

Aus diesem Grunde wird nach der EP 0657513 A1 zusätzlich zur kationischen Stabilisierung - eine nicht-ionogene Stabilisierung durch den Einbau von Ethylenoxid tragenden Polyetherketten durchgeführt, was wiederum aufgrund der damit verbundenen höheren Hydrophilie die Chemikalienbeständigkeit, insbesondere die Wasserfestigkeit der Polymerfilme dieser beschriebenen Polyurethandispersionen, mindert.

Die bekannten wässrigen, kationisch stabilisierten Polyurethandispersionen sollen keine oder deutlich weniger flüchtige, organische Substanzen, als nach dem Stand der Technik bekannt, enthalten, um auch hohen Anforderungen an Umweltauflagen gerecht werden zu können.

Es ist deshalb die der Erfindung zugrundeliegende Aufgabe, wässrige, kationisch stabilisierte Bindemittel auf Polyurethanbasis zur Verfügung zu stellen, die
- eine Sperrwirkung gegen an die Oberfläche migrierende Inhaltsstoffe von Holz und Holzwerkstoffen (Ausbluten) enthalten und daher als Beschichtungsmittel für Holz und Holzwerkstoffe geeignet sind,
- die auch ohne Anwesenheit von Koaleszenzmitteln nicht-klebrige Filme bilden,
- die pH-Werte im Bereich von 3 bis 7 aufweisen,
- die niedrige mittlere Teilchendurchmesser aufweisen,
- die einen niedrigen VOC aufweisen, und
- die aufgrund guter Haftung z.B. Bestandteil von Korrosionsschutzlacken sein können.

Diese und weitere Aufgaben werden durch den Gegenstand des Anspruches 1 gelöst. Bevorzugte Ausführungsformen sind Gegenstand der Unteransprüche oder nachfolgend beschrieben.

Die erfindungsgemäßen Polyurethandispersionen sind wie folgt erhältlich:
In der ersten Stufe a) werden Polvole A und ggf. Polyole B, sowie der zur kationischen Stabilisierung benötigte Aminoalkohol, je nach Viskosität der eingesetzten Polyole in Lösungsmitteln verdünnt oder lösungsmittelfrei, in Gegenwart eines Katalysators oder auch katalysatorfrei mit der Gesamtmenge des Diisocyanates bzw. Diisocyanatgemisches in einem NCO/OH-Verhältnis von 1,1 :1 bis 2,5 : 1 umgesetzt und solange auf Reaktionstemperatur insbesondere zwischen 50 und 100°C gehalten, bis der gewünschte NCO-Gehalt im NCO- terminierten Präpolymer erreicht ist, wobei die Reaktion bis zur Umsetzung von größer 80% der Summe der Hydroxylgruppen und der primären oder sekundären Amin-Gruppen mit den Isocyanatgruppen geführt wird;
In der zweiten Stufe b) wird, je nach Viskosität des unter Stufe 1 gebildeten Präpolymers, ohne Zusatz an Lösungsmittel oder unter Zugabe (weiterer) Mengen an Lösungsmittel, das NCO-terminierte Präpolymer mit einer oder mehreren Diamino- und/oder Monoamino-Hydroxyverbindungen oder Alkoholen mit einer Hydroxyfunktionalität von 2 oder 3 oder Gemischen als Kettenverlängerer, zu einem NCO/OH-Verhältnis von 1:1 bis 1,2:1 umgesetzt, wobei das NCO/OH-Verhältnis kleiner ist als in a) und die Reaktionstemperatur vorzugsweise zwischen 25 und 70°C gehalten wird, bis der theoretische NCO-Gehalt von vorzugsweise kleiner 0,05% im Polyurethan erreicht ist. Es wird bevorzugt Ethylendiamin als Kettenverlängerer eingesetzt.

Danach werden die tertiären Amingruppen des sich gebildeten kationisch stabilisierten Polyurethans mit Säuren, z.B. Mineralsäuren, wie Phosphorsäure und Schwefelsäure, oder organischen C1- bis C6- Säuren, wie Milchsäure und Essigsäure, bzw. anderen geeigneten Quarternisierungsmitteln, wie C1- bis C4 Alkylhalogeniden, in die entsprechenden Ammoniumsalze überführt. Bevorzugt wird Essigsäure verwendet. Im Sinne der vorliegenden Anmeldung umfasst der Begriff der Quarternisierung auch die Protonierung mit z.B. einer Säure. Die Quarternisierung wird vorzugsweise bei Temperaturen zwischen 25 und 70°C durchgeführt.

Im letzten Schritt wird das vollständig abreagierte Polyurethan bei Temperaturen von vorzugsweise kleiner 40°C in Wasser dispergiert oder durch Zugabe von Wasser in einem Einstufenprozess dispergiert. Soweit eingesetzt, wird ein etwaiges Lösungsmittel vorzugsweise danach unter Unterdruck entfernt.

Die Herstellung erfolgt vorzugsweise ohne einen Katalysator für die Polyurethanreaktion.

Bei der Ausgangskomponente Polvol A handelt es sich vorzugsweise um eine mindestens eine Hydroxyl- und mindestens eine weitere Hydroxyl- und/oder mindestens eine weitere Aminogruppen enthaltende Verbindung der mittleren Molekularmasse (Mₙ) 500 bis 5000 g/mol, vorzugsweise 700 bis 2000 g/mol. Diese Polyolkomponenten weisen insbesondere eine Funktionalität von mindestens 1,8 bis 5, bevorzugt 1,9 bis 3 auf. Bei den Polyolkomponenten als Polyol A handelt es sich z.B. um Polyetherpolyole, Polyesterpolyole, epoxidierte Öle mit endständigen Hydroxylgruppen, Polycarbonate, Polyacrylate, Polyolefine, Dimerdiole oder Mischungen aus diesen.

Die Polyesterpolyole, vergleiche z.B. aus Ullmanns Enzyklopädie der technischen Chemie, 4. Auflage Band 19, S. 62-65, werden bevorzugt durch Umsetzung von zweiwertigen Alkoholen mit zweiwertigen Carbonsäuren und/oder der entsprechenden Carbonsäureanhydride erhalten. Die Carbonsäuren können dabei aliphatisch, cycloaliphatisch, araliphatisch oder aromatisch sein. Beispielhaft genannt sind Pthalsäure, Pthalsäureanhydrid, Isopthalsäure, Tetra- oder Hexahydropthalsäureanhydrid, Cyclohexyldicarbonsäure, Maleinsäure, Maleinsäureanhydrid, Fumarsäure, dimere Fettsäuren und aliphatische, lineare Dicarbonsäuren mit einer Kohlenstoffanzahl zwischen 2 und 20.

Als mehrwertige Alkohole zur Herstellung der Polyesterpolyole kommen z.B. Ethylenglykol, Propan-1,2-diol, Propan-1,3-diol, Butan-1,3-diol, Butan-1,4-diol, Neopentylglykol, Trimethylolpropandiol, Cyclohexyldimethanol, 2-Methylpropan-1,3-diol, Methylpentandiole, Diethylenglykol, Triethylenglykol, Polyethylen- und/oder Polypropylenglykol, Dipropylenglykol und/oder Dibutylenglykol in Frage.

Als Polyol A können auch Polycaprolactondiole und Polycarbonatdiole (hergestellt aus epsilon-Caprolacton, ß-Propiolacton, g-Butyrolacton und/oder Methylepsilon-caprolacton sowie deren Gemische) verwendet werden.

Als Polyacrylatpolyole kommen alle Acrylatharze in Frage, die durch Einbau von hydroxyfunktionellen Acrylatmonomeren, wie Hydroxyethylacrylat, Hydroxymethylacrylat und ähnlichen Verbindungen, Hydroxylgruppen zwischen 20 und 250 besitzen.

Als Polyolefine sind Polyhydroxyolefine, bevorzugt mit zwei endständigen Hydroxylgruppen, gemeint.

Bei der Ausgangskomponente Polyol B handelt es sich vorzugsweise um eine mindestens zwei Hydroxylgruppen enthaltende Verbindung der Molmasse 100 bis kleiner 500, vorzugsweise 100 bis 250. Es können aliphatische oder cycloaliphatische, lineare oder verzweigte Polyole verwendet werden. Beispiele sind Ethylenglykol, 1,2- und 1,3- Propylenglykol, 1,6-Hexandiol, Neopentylglykol, 1,4- oder 2,3-Butandiol, Cyclohexandimethanol, insbesondere 1,4- Cyclohexan-dimethanol, 1,5-Pentandiol, Glycerin, Isosorbit, Trimethylolpropan und Pentaerythrit. Bevorzugt werden cycloaliphatische Polyole wie 1,4-Cyclohexandimethanol verwendet.

Bei dem Kettenverlängerer handelt es sich vorzugsweise um eine mindestens eine Amin- und mindestens eine weitere Amin- und/oder mindestens eine weitere Hydroxylgruppe enthaltende Verbindung. Beispiele sind Ethylendiamine, Diethylentriamine, Ethanolamine und/oder Isophorondiamine. Bevorzugt wird Ethylendiamin verwendet.

Als Aminoalkohol einsetzbar sind Verbindungen mit mindestens einer primären oder sekundären Hydroxylgruppe und mindestens einer tertiären Amingruppe. Bei dem Aminoalkohol befindet sich das zur Ammoniumsalz-Bildung befähigte Stickstoffatom in der Seitenkette. Der Aminoalkohol wird längs der Verbindung der mindestens einen primären oder sekundären Hydroxylgruppe und einer weiteren Hydroxylgruppe oder einer primären sekundären Amingruppe in die Hauptkette eingebaut. Der Aminoalkohol verfügt vorzugsweise über zwei Hydroxylgruppen.

Bevorzugt ist, wenn die Kohlenstoff-Kohlenstoff-Kette, die die beiden Hydroxylgruppen miteinander verbindet, möglichst wenige Kohlenstoffe (kleiner sechs) beinhaltet. Der Aminoalkohol ist weiterhin besonders bevorzugt, wenn die Alkylgruppen am tertiären Stickstoffatom zwei Methylgruppen, ganz besonders bevorzugt zwei Ethylgruppen oder Mischungen aus Methyl und Ethyl sind.

Die grundsätzliche Struktur des Aminoalkohols wird durch die folgende Formel wiedergegeben: 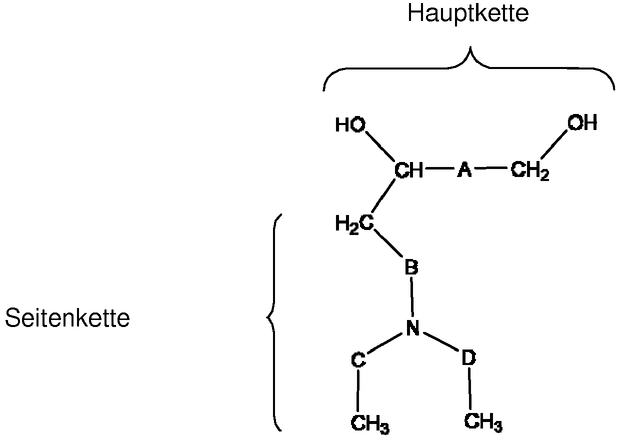 mit jeweils unabhängig voneinander
- A =: Kohlenwasserstoff-Rest mit 0 bis 6 C-Atomen, vorzugsweise mit 0 bis 4 C-Atomen oder auch mit 1 bis 3 C-Atomen;
- B =: Kohlenwasserstoff-Rest mit 0 bis 6 C-Atomen, vorzugsweise mit 0 bis 4 C-Atomen oder auch mit 1 bis 3 C-Atomen;
- C und D =: Kohlenwasserstoff-Rest mit 0 bis 15 C-Atomen, vorzugsweise mit 0 oder 1 C-Atom, oder auch mit 1 bis 3 C-Atomen.

Als Beispiel sind 3-Dimethylamino-propandiol-1,2 und 3-Diethylamino-propandiol-1,2 zu nennen. Bevorzugt wird 3-Diethylamino-propandiol-1,2 eingesetzt.

Die Konzentration des verwendeten Aminoalkohols beträgt vorzugsweise 1 bis 15 Gew.%, insbesondere 4 bis 12 Gewichtsprozente (jeweils relativ zur Summe aus Polyol A, Polyol B, Aminoalkohol und Kettenverlängerer). Zusätzlich kann auf den Zusatz von Emulgatoren verzichtet werden, die während der Umsetzung nicht Bestandteil des Polymers werden können.

Daneben können zusätzlich zu dem Aminoalkohol Verbindungen eingesetzt werden die über keine tertiäre Amingruppe in der Seitenkette verfügen wie Dimethylaminoethanol, Methylethanolamin, N-Butyldiethanolamin, N-Methyldiisopropanolamin, Triethanolamin und/oder Triisopropanolamin.

Geeignete Lösungsmittel zur Herstellung der erfindungsgemäßen Polyurethandispersionen sind beispielsweise Methoxyhexanon, Methylethylketon, Methylisobutylketon, Aceton oder Gemische dieser und anderer wasserlöslicher Lösungsmittel mit Siedepunkten unter 100°C.

Hierbei kann das Acetonverfahren, wie aus der WO 2009/130269 und WO 2010/012400 bekannt, eingesetzt werden. Bei diesem Prozess wird ein wassermischbares, aber unter 100°C siedendes Lösungsmittel wie Aceton oder Methylethylketon intermediär zur Viskositätsreduzierung während der Präpolymerherstellung eingesetzt. Dieses wird aber nach Herstellung der fertigen wässrigen Polyurethandispersion aus der wässrigen Phase mittels Destillation wieder weitgehend azeotrop abdestilliert, so dass Restlösungsmittelgehalte von unter 1%, üblicherweise unter 0,5%, in der fertigen Dispersion verbleiben.

Als mehrfunktionelles Isocvanat werden insbesondere monomere Diisocyanate, bevorzugt auf aliphatischer oder cycloaliphatischer Basis, eingesetzt. Üblicherweise besitzen diese monomeren Diisocyanate bzw. Diisocyanatgemische einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen. Beispiele derartiger Diisocyanate sind Tetramethylendiisocyanat, Hexamethylendiisocyanat, 1,4-Diisocyanatocyclohexan, 1-Isocyanato-3,5,5-trimethyl-5-isocyanatomethylcyclohexan und Tetramethylxylylendiisocyanat, sowohl in reiner Form als auch als Isomerengemisch. Diese Diisocyanate können alleine oder auch in Kombination eingesetzt werden. Bevorzugt wird 1-Isocyanato-3,5,5-trimethyl-5-isocyanatomethylcyclohexan eingesetzt.

Diese neuartigen Polyurethandispersionen können in der Regel ohne Verwendung von Katalysatoren zur Beschleunigung der typischen Polyurethansynthese hergestellt werden.

Auf Basis dieser neuartigen Rohstoffzusammensetzung wurde weiterhin überraschenderweise gefunden, dass z.B. durch den Einsatz von nachwachsenden Rohstoffen, wie epoxidiertem Rapsöl oder Dimerdiol als Polyol A unter Verwendung von oder Verzicht auf Anteile von niedermolekularen Diolen als Polyol B, feinteilige Polyurethandispersionen hergestellt werden können.

Als feinteilig werden bei diesen, auf dem neuartigen Herstellprozess beruhenden Polyurethandispersionen, Teilchengrößen von 25 bis 120 nm, vorzugsweise 35 bis 70 nm angesehen, bestimmt mittels dynamischer Lichtstreuung mittels eines Malvern Zetasizers nano S.

Ferner wurde gefunden, dass die erfindungsgemäßen, kationisch stabilisierten Polyurethandispersionen bei Raumtemperatur einen transparenten Film unter Verdunstung des Wassers bilden, der leicht oberflächenklebrig bis nicht oberflächenklebrig ist. Im besonderen Fall der Nichtoberflächenklebrigkeit des Filmes sind Pendeldämpfungen nach König größer als 30 sek. bevorzugt. Solche Filme sind z.B. aus kationisch stabilisierten Polyurethandispersionen der nachfolgenden Zusammensetzung erhältlich:
- der Anteil von Polyol A beträgt mehr als 60 Gew.%, vorzugsweise mehr als 70 Gew.%, besonders bevorzugt mehr als 80 Gew.%;
- der Anteil von Polyol B beträgt weniger als 10 Gew.%, vorzugsweise weniger als 5 % Gew.%, besonders bevorzugt 1 bis 5 Gew.%;
- der Anteil der Aminoalkohole beträgt 1 bis 15 Gew.%, vorzugsweise 4 bis 12 Gew.%; und
- der Anteil der Kettenverlängerer beträgt 1 bis 15 Gew.%, vorzugsweise 4 bis 12 Gew.%,
jeweils relativ zur Summe aus Polyol A, Polyol B, Aminoalkohol und Kettenverlängerer.

Ferner können die neuartigen, kationisch stabilisierten wässrigen Polyurethandispersionen einen hohen Anteil an nachwachsenden Rohstoffen enthalten, der in Analogie zu herkömmlichen Alkydharzen für typische Eigenschaften wie Anfeuerung des Substrates, Verlauf und Filmbildung verantwortlich ist. Auf diese Weise können neben den bekannten Eigenschaften der Urethangruppen (basierend auf petrochemisch erzeugten Rohstoffen), wie rasche Trocknung und Filmbildung, auch oben genannte Eigenschaften in einem Polymergerüst vereinigt werden.

Auf diese Weise konnten als Polyol A auch erstmalig hydrophobe epoxidierte Öle, wie das epoxidierte Rapsöl Isopol RZ 160 VP (Hersteller die Fa. Isoelektra) oder Dimerdiole vom Typ Priplast (Hersteller Fa. Croda), zur Herstellung von ausschließlich kationisch stabilisierten Polyurethandispersionen, ohne weiteren Einsatz von externen Emulgatoren oder Schutzkolloiden, eingesetzt werden.

Dieser Sachverhalt wird an den folgenden Versuchsbeispielen, einmal unter erfindungsgemäßer Verwendung von 3-Diethylamino-propandiol-1,2 in Beispiel 1 und einmal unter Einsatz von Methyldiethanolamin (in stöchiometrisch gleicher Einsatzmenge) in Beispiel 2 (Vergleichsbeispiel), erläutert.

Die neuartigen kationisch stabilisierten Polyurethandispersionen können mit kationisch stabilisierten Acrylatdispersionen, wie zum Beispiel Liocryl XAM 4100 (Hersteller Synthopol Chemie, Buxtehude), in Mischungsverhältnissen von 1:9 bis 9:1 kombiniert werden.

Die erfindungsgemäßen wässrigen, kationisch stabilisierten Polyurethandispersionen können in wässrigen Beschichtungsmitteln, insbesondere in wässrigen 1- Komponenten- Beschichtungsmitteln, zum Beispiel für Papier, als Sperrgrund gegen an die Oberfläche migrierende Inhaltsstoffe von Holz und Holzwerkstoffen oder als Bestandteil eines Korrosionsschutzlackes, insbesondere einer Grundierung Verwendung finden.

### Beispiel 1:

In einem Reaktor, ausgestattet mit einem KPG-Rührer, einem Rückflusskühler, einem Thermometer sowie einer Stickstoffzufuhr, wurden 176,3 g eines Rapsölpolyols, 8,0 g Cyclohexandimethanol, 16,2 g 3-Diethylamino-propandiol-1,2 und 100 g Aceton vorgelegt und auf 65°C erhitzt. Nach Zugabe von 130,7 g Isophorondiisocyanat unter Stickstoffatmosphäre wurde die Reaktionsmischung bei 70°C gerührt, bis der theoretisch berechnete NCO-Gehalt von 3,9 % erreicht wurde. Der Reaktionsverlauf wurde titrimetrisch verfolgt. Im Anschluss wurde auf 60°C gekühlt und 12 g Ethylendiamin hinzugetropft. Danach wurde mit 13,2 g Essigsäure neutralisiert und das Präpolymer unter intensivem Rühren in 660,0 g deionisiertem Wasser dispergiert. Das Aceton wurde zum Abschluss unter vermindertem Druck abdestilliert. Es wurde eine stabile Polyurethan-Dispersion mit einem Feststoffgehalt von 34%, einem pH-Wert von 4,5 und einer Viskosität von 172 mPas (20°C, DIN ISO 976) erhalten. Die Pendelhärte (90 µm Nassfilm, getrocknet 24 h im Klimaraum (23°C)) betrug 35 sec. Die mittlere Teilchengröße betrug 45 µm.

### Beispiel 2 (Vergleichsbeispiel):

In einem Reaktor, ausgestattet mit einem KPG-Rührer, einem Rückflusskühler, einem Thermometer sowie einer Stickstoffzufuhr, wurden 176,3 g eines Rapsölpolyols, 8,0 g Cyclohexandimethanol, 13,1 g Methyldiethanolamin und 100 g Aceton vorgelegt und auf 65°C erhitzt. Nach Zugabe von 130,7 g Isophorondiisocyanat unter Stickstoffatmosphäre wurde die Reaktionsmischung bei 70°C gerührt, bis der theoretisch berechnete NCO-Gehalt von 4,0 % erreicht wurde. Im Anschluss wurde auf 60°C gekühlt und 12 g Ethylendiamin hinzugetropft. Danach wurde mit 13,2 g Essigsäure neutralisiert und das Präpolymer unter intensivem Rühren in 660,0 g deionisiertem Wasser dispergiert, wobei das Polymer nicht vom Wasser aufgenommen wurde.

## Patentansprüche

1. Verfahren zur Herstellung von kationisch stabilisierten Polyurethandispersionen umfassend zumindest folgende Schritte:
a) Herstellung eines NCO-terminierten Polyurethanpräpolymers, wobei die Herstellung des Polyurethanpräpolymers die Umsetzung zumindest folgender Edukte umfasst:
- zumindest ein Polyol A,
- zumindest einen Aminoalkohol der Formel: 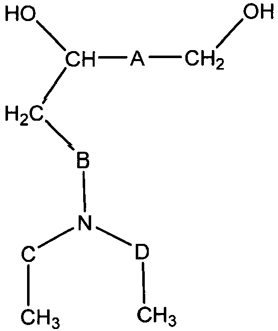 mit einer tertiären Amin-Gruppe und mit jeweils unabhängig voneinander:
A = Kohlenwasserstoff-Rest mit 0 bis 6 C-Atomen;
B = Kohlenwasserstoff-Rest mit 0 bis 6 C-Atomen;
C und D = Kohlenwasserstoff-Rest mit 0 bis 15 C-Atomen,
- zumindest ein mehrfunktionelles Isocyanat,
wobei das NCO/OH+NH Verhältnis der Edukte 1,1 :1 bis 2,5 : 1 beträgt und die Reaktion bis zur Umsetzung von größer 80% der Summe der Hydroxylgruppen und der primären oder sekundären Amin-Gruppen mit den Isocyanatgruppen geführt wird; und
wobei die tertiäre Amin-Gruppe Teil einer Seitengruppe dieser Kohlenstoff-Kohlenstoff-Kette ist und über zumindest eine -CH₂- Gruppe an die Kohlenstoff-Kohlenstoff- Kette gebunden ist,
b) Umsetzung des NCO-terminierten Polyurethanpräpolymers mit einer oder mehreren Verbindungen zur Kettenverlängerung, aufweisend zumindest eine funktionelle Gruppe, vorzugsweise zumindest zwei funktionelle Gruppen, ausgewählt aus einem oder mehreren Mitgliedern der folgenden Gruppen:
- einer primären Aminogruppe,
- einer sekundären Aminogruppe, und
- einer Hydroxylgruppe,
bis zu einem NCO/OH+NH-Verhältnis von 1:1 bis 1,2:1 und das NCO/OH+NH - Verhältnis kleiner als in Schritt a),
c) Umsetzung der tertiären Amingruppe mit einem und mehreren Quarternisierungsmitteln, einschließend die Protonierung mit einer Säure, zu Ammoniumsalzen, und
d) Dispergierung in Wasser.

2. Verfahren gemäß Anspruch 1, wobei das in Schritt a) eingesetzte Polyol A mindestens zwei Hydroxylgruppen enthält und eine mittlere Molekularmasse (Mn) größer 500 bis 5000 g/mol, vorzugsweise 700 bis 2000 g/mol aufweist, insbesondere als Bestandteil einer Polyolzusammensetzung mit einer Funktionalität von mindestens 1,8 bis 5, bevorzugt 1,9 bis 3.

3. Verfahren gemäß zumindest einem der vorhergehenden Ansprüche, wobei in Schritt a) weiterhin ein Polyol B eingesetzt wird, vorzugsweise ein Diol oder umfassend ein Diol, aufweisend mindestens zwei Hydroxylgruppen und eine Molekularmasse von 100 bis kleiner 500 g/mol, vorzugsweise 100 bis 250 g/mol.

4. Verfahren gemäß zumindest einem der vorhergehenden Ansprüche, wobei in Schritt a) weiterhin eine Amin-Verbindung eingesetzt wird, die neben einer primären und/oder sekundären Aminogruppe weiterhin zumindest eine weitere primäre und/oder sekundäre Aminogruppe oder zumindest eine Hydroxylgruppe aufweist, wobei die Amin-Verbindung in einem Gewichtsverhältnis von weniger als 10 Gew.% bezogen auf die Summe des Gewichts der Polyole A und Polyole B eingesetzt wird.

5. Verfahren gemäß zumindest einem der vorhergehenden Ansprüche, wobei
A = ein Kohlenwasserstoff-Rest mit 0 oder mit 1 bis 3 C-Atomen;
B = ein Kohlenwasserstoff-Rest mit 0 oder mit 1 bis 3 C-Atomen; und
C und D = ein Kohlenwasserstoff-Rest mit 0 oder mit 1 bis 3 C-Atomen
ist.

6. Verfahren gemäß zumindest einem der vorhergehenden Ansprüche,
wobei der Abstand zwischen tertiärer Amingruppe und Hydroxylgruppe im Aminoalkohol jeweils 2 bis 6, vorzugsweise 2 oder 3 Kohlenstoffatome beträgt und wobei der Abstand zumindest einer Hydroxylgruppe zur nächsten Hydroxylgruppe des Aminoalkohols in der Hauptkette 2 bis 5, vorzugsweise 2 oder 3, Kohlenstoffatome beträgt;

7. Verfahren gemäß zumindest einem der vorhergehenden Ansprüche,
wobei das mehrfunktionelle Isocyanat ein monomeres Diisocyanat oder ein Gemisch verschiedener Diisocyanate ist, vorzugsweise ein aliphatisches oder cycloaliphatisches Diisocyanat.

8. Verfahren gemäß zumindest einem der vorhergehenden Ansprüche, wobei die Verbindungen zur Kettenverlängerung zumindest zwei primäre Aminogruppen aufweisen und ggf. zusätzlich eine sekundäre Aminogruppe, und insbesondere Ethylendiamin ist.

9. Verfahren gemäß zumindest einem der vorhergehenden Ansprüche,
wobei das Quarternisierungsmittel zumindest eine Mono- oder Dicarbonsäure mit 1 bis 6 Kohlenstoffatomen ist, vorzugsweise Essigsäure;
und/oder
wobei das zumindest eine Quarternisierungsmittel im molaren Überschuss, vorzugsweise im 1,2 bis 2,5 fachen Überschuss, relativ zu den tertiären Amingruppen in der Seitenkette eingesetzt wird.

10. Verfahren gemäß zumindest einem der vorhergehenden Ansprüche, wobei in Schritt a) als Lösungsmittel ein Lösungsmittel, das unter 100°C siedet und unabhängig mit Wasser in jedem Verhältnis homogen mischbar ist, vorzugsweise Aceton und Methylethylketon, verwendet wird und das Lösungsmittel vorzugsweise nach Schritt d) entfernt wird.

11. Verfahren gemäß zumindest einem der vorhergehenden Ansprüche, wobei jeweils unabhängig voneinander
die Reaktionstemperatur in Schritt a) 50 bis 100°C,
die Reaktionstemperatur in Schritt b) 25 bis 70°C, und
die Reaktionstemperatur in Schritt c) 25 bis 70°C beträgt,
wobei die Reaktionstemperatur in Schritt b) vorzugsweise kleiner ist als in Schritt a);
und - auch unabhängig hiervon - vorzugsweise in Schritt d) die Temperatur kleiner 40°C ist.

12. Verfahren gemäß zumindest einem der vorhergehenden Ansprüche, wobei unabhängig voneinander
- der Anteil von Polyol A mehr als 60 Gew.%, vorzugsweise mehr als 70 Gew.%, besonders bevorzugt mehr als 80 Gew.% beträgt;
- der Anteil von Polyol B weniger als 10 Gew.%, vorzugsweise 0,1 bis 5 Gew.%, besonders bevorzugt 1 bis 5 Gew.% beträgt;
- der Anteil der Aminoalkohole 1 bis 15 Gew.%, vorzugsweise 4 bis 12 Gew.% beträgt; und
- der Anteil der Kettenverlängerer 1 bis 15 Gew.%, vorzugsweise 4 bis 12 Gew.% beträgt;
jeweils relativ zur Summe aus Polyol A, Polyol B, Aminoalkohol und Kettenverlängerer.

13. Verfahren gemäß zumindest einem der vorhergehenden Ansprüche, wobei die Herstellung der kationisch stabilisierten Polyurethandispersionen so geführt wird, dass die Reaktion bis zur Umsetzung von größer 95%, insbesondere bevorzugt größer 99%, der Summe der Hydroxylgruppen und der primären oder sekundären Amin-Gruppen, mit den Isocyanatgruppen geführt wird.

14. Kationisch stabilisierte Polyurethandispersionen erhältlich nach zumindest einem der vorhergehenden Ansprüche.

15. Kationisch stabilisierte Polyurethandispersion nach Anspruch 14 weiterhin **gekennzeichnet durch** eines oder mehrere der folgenden Merkmale,
a) aufweisend einen pH-Wert von 3 bis 7, vorzugsweise 4 bis 6,5;
b) aufweisend einen Feststoffgehalt von 30 bis 50 Gew.%, bestimmt nach DIN EN ISO 3251;
c) aufweisend eine Viskosität bei 20 °C von 10 bis 600 mPas nach DIN ISO 976;
d) enthaltend weiterhin eine Acrylat-Dispersion und/oder Vinylacetat- Dispersion im Gewichtsverhältnis von 1: 9 bis 9:1;
e) aufweisend mittlere Partikeldurchmesser von 25 bis 120 nm, vorzugsweise 35 bis 70 nm, bestimmt mittels dynamischer Lichtstreuung.

16. Film, erhältlich aus der kationisch stabilisierten Polyurethandispersion nach Anspruch 14 oder 15 , der nach Aufbringung bei 25°C und einer relativen Luftfeuchte von 80% auf die Substratoberflächen und Trocknung unter 80°C eine Pendelhärte nach König nach DIN 53157 von größer 30 sec bezogen auf einen 90 µm dicken Nassfilmstärkeauftrag aufweist und nicht klebrig ist.

17. Verwendung der Polyurethandispersion nach Anspruch 14 oder 15 in wässrigen Beschichtungsmitteln, insbesondere in wässrigen, vorzugsweise nichtklebrigen, 1-Komponenten-Beschichtungsmitteln, zum Beispiel für Papier, als Sperrgrund gegen an die Oberfläche migrierende Inhaltsstoffe von Holz und Holzwerkstoffen oder als Bestandteil eines Korrosionsschutzlackes, insbesondere einer Grundierung.

## Claims

1. Method for the preparation of cation-stabilised polyurethane dispersions comprising at least the following steps:
a) preparation of a NCO-terminated polyurethane prepolymer wherein the preparation of the polyurethane prepolymer comprises at least the conversion of the following reagents:
- at least a polyol A
- at least an amino alcohol having the formula: 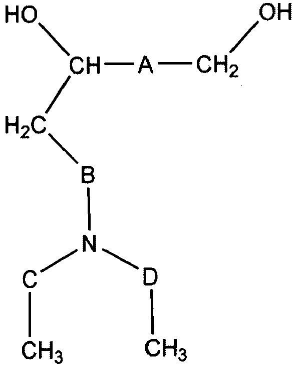 having a tertiary amine group and in each case independently of each other:
A= hydrocarbyl having 0 to 6 C-atoms
B= hydrocarbyl having 0 to 6 C-atoms
C and D= hydrocarbyl having 0 to 15 C-atoms
at least a multifunctional isocyanate,
wherein the NCO/OH+NH ratio of the reagents is 1.1 : 1 to 2.5 : 1 and the reaction is performed until a conversion of more than 80% of the sum of the hydroxyl-groups and the primary or the secondary amine-groups with the isocyanate groups; and
wherein the tertiary amine-group is part of a side group of the carbon-carbon-chain and is bound via at least one -CH₂- group to the carbon-carbon-chain,
b) conversion of the NCO-terminated polyurethane prepolymer with one or more compounds for chain elongation, having at least one functional group, preferably at least two functional groups, selected from one or more members of the following groups:
- a primary amino group
- a secondary amino group, and
- a hydroxyl group,
until a NCO/OH+NH - ratio of 1 : 1 to 1.2 : 1 and the NCO/OH+NH - ratio is below that of step a),
c) conversion of the tertiary amine group with one or more quarternising agents, including protonation with an acid to give ammonium salts, and
d) dispersing in water.

2. Method according to claim 1, wherein the polyol A used in step a) contains at least two hydroxyl groups and has an average molecular mass (Mn) of higher 500 to 5000 g/mol, preferably 700 to 2000 g/mol, particularly as part of a polyol composition having a functionality of at least 1.8 to 5, preferably 1.9 to 3.

3. Method according to at least one of the preceding claims, wherein in step a) furthermore a polyol B is applied, preferably a diol or comprising a diol, having at least two hydroxyl groups and a molecular mass of 100 to below 500 g/mol, preferably 100 to 250 g/mol.

4. Method according to at least one of the preceding claims, wherein in step a) furthermore an amine-compound is applied, having beside a primary and/or secondary amino group furthermore at least one other primary and/or secondary amino group or at least one hydroxyl group, wherein the amine compound is applied in a weight ratio of less 10 wt.% relative to the sum of the weight of the polyols A and the polyols B.

5. Method according to at least one of the preceding claims, wherein
A= is a hydrocarbyl having 0 or 1 to 3 C-atoms;
B= is a hydrocarbyl having 0 or 1 to 3 C-atoms; and
C and D= is a hydrocarbyl having 0 or 1 to 3 C-atoms.

6. Method according to at least one of the preceding claims, wherein the distance between tertiary amine group and hydroxyl group in the amino alcohol is in each case 2 to 6, preferably 2 or 3, carbon atoms and wherein the distance of at least one hydroxyl group to the next hydroxyl group of the amino alcohol in the main chain is 2 to 5, preferably 2 or 3 carbon atoms.

7. Method according to at least one of the preceding claims, wherein the multifunctional isocyanate is a monomeric diisocyanate or a mixture of different diisocyanates, preferably an aliphatic or cycloaliphatic diisocyanate.

8. Method according to at least one of the preceding claims, wherein the compounds for chain elongation are having at least two primary amino groups and if applicable a secondary amino group, and in particular is ethylenediamine.

9. Method according to at least one of the preceding claims, wherein the quarternising agent is at least a mono or dicarboxylic acid having 1 to 6 carbon atoms, preferably acetic acid;
and/or
wherein the at least one quarternising agent is applied in a molar excess, preferably 1.2 to 2.5 fold molar excess, relatively to the tertiary amine groups in the side chain.

10. Method according to at least one of the preceding claims, wherein as per step a) a solvent is applied as solvent, having a boiling point of below 100°C and is independently homogenously miscible with water in every ratio, preferably acetone and methyl ethyl ketone, and the solvent is preferably removed after step d).

11. Method according to at least one of the preceding claims, wherein in each case independently of each other
the reaction temperature of step a) is 50 to 100°C,
the reaction temperature of step b) is 25 to 70°C, and
the reaction temperature of step c) is 25 to 70°C,
wherein the reaction temperature of step b) is preferably below the reaction temperature of step a)
and - also independently hereof - the temperature of step d) preferably is below 40°C.

12. Method according to at least one of the preceding claims, wherein independently of each other
- the amount of polyol A is more than 60 wt.%, preferably more than 70 wt.%, particularly preferably more than 80 wt.%;
- the amount of polyol B is less than 10 wt.%, preferably 0.1 to 5 wt.%, particularly preferably 1 to 5 wt.%;
- the amount of the amino alcohols is 1 to 15 wt.%, preferably 4 to 12 wt.%;
- the amount of the chain extenders is 1 to 15 wt.%, preferably 4 to 12 wt.%;
in each case, relative to the sum of polyol A, polyol B amino alcohol and chain extenders.

13. Method according to at least one of the preceding claims, wherein the manufacturing of the cation-stabilised polyurethane dispersions is conducted in that a conversion of above 95%, particularly preferably above 99% of the sum of hydroxyl groups and primary or secondary amine groups with the isocyanate groups is reached.

14. Cation-stabilised polyurethane dispersions obtainable by at least one of the preceding claims.

15. Cation-stabilised polyurethane dispersion according to claim 14 further **characterised by** one or more of the following features
a) having a pH-value of 3 to 7, preferably 4 to 6.5;
b) having a solid content of 30 to 50 wt.% determined according to DIN EN ISO 3251;
c) having a viscosity of 10 to 600 mPas at 20°C determined according to DIN ISO 976;
d) furthermore containing an acrylate-dispersion and/or vinyl acetate-dispersion in a weight ratio of 1 : 9 to 9 : 1;
e) having average particle diameters of 25 to 120 nm, preferably 35 to 70 nm, determined by dynamic light scattering.

16. A film, obtainable from the cation-stabilised polyurethane dispersion according to claim 14 or 15, having, after application onto the surface of a substrate at 25°C and a relative air humidity of 80% and drying below 80°C, a pendulum hardness according to König according to DIN 53157 of above 30 sec, relative to the application of a wet film with a thickness of 90 µm, and is not sticky.

17. Use of the polyurethane dispersion according to claim 14 or 15 in aqueous coating compositions, particularly in aqueous, preferably non-sticky, 1-component coating compositions, for example for paper, as blocking primer against to the surface migrating ingredients of wood and wood-based material, or as a component of an anticorrosive lacquer, particularly of a primer.

## Revendications

1. Procédé de fabrication de dispersions de polyuréthane cationiques stabilisées, comprenant au moins les étapes suivantes :
a) fabrication d'un prépolymère de polyuréthane à terminaisons NCO, la fabrication du prépolymère de polyuréthane comprenant la conversion au moins des réactifs suivants :
- au moins un polyol A,
- au moins un aminoalcool de formule : 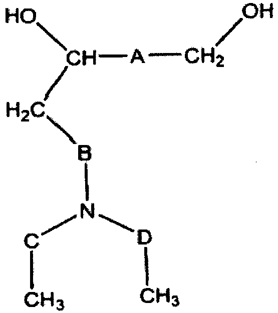 comprenant un groupe amine tertiaire et, respectivement indépendamment les uns des autres :
A = résidu hydrocarboné ayant 0 à 6 atomes de C ;
B = résidu hydrocarboné ayant 0 à 6 atomes de C ;
C et D = résidu hydrocarboné ayant 0 à 15 atomes de C,
- au moins un isocyanate polyfonctionnel,
où le rapport NCO/OH+NH des réactifs est de 1,1 :1 à 2,5 :1, et la réaction est réalisée jusqu'à la conversion de plus de 80 % de la somme des groupes hydroxyle et des groupes amine primaire ou secondaire avec les groupes isocyanate ; et
où le groupe amine tertiaire fait partie d'un groupe latéral de cette chaîne carbone - carbone et est lié à la chaîne carbone - carbone par le biais d'au moins un groupe -CH₂-,
b) conversion du prépolymère de polyuréthane à terminaisons NCO avec un ou plusieurs composés allongeurs de chaînes, présentant au moins un groupe fonctionnel, de préférence au moins deux groupes fonctionnels, choisis parmi un ou plusieurs membres des groupes suivants :
- un groupe amino primaire,
- un groupe amino secondaire, et
- un groupe hydroxyle,
jusqu'à un rapport NCO/OH+NH de 1,1 :1 à 1,2 :1 et le rapport NCO/OH+NH inférieur à celui de l'étape a),
c) conversion du groupe amine tertiaire avec un ou plusieurs agents de quaternisation, y compris protonation avec un acide, pour donner des sels d'ammonium, et
d) dispersion dans de l'eau.

2. Procédé selon la revendication 1, dans lequel le polyol A mis en oeuvre à l'étape a) contient au moins deux groupes hydroxyle et présente une masse moléculaire moyenne (Mn) de plus de 500, jusqu'à 5000 g/mole, de préférence allant de 700 à 2000 g/mole, en particulier en tant que composant d'une composition de polyol ayant une fonctionnalité d'au moins 1,8 à 5, de préférence de 1,9 à 3.

3. Procédé selon au moins l'une des revendications précédentes, dans lequel, à l'étape a), on met en oeuvre également un polyol B, de préférence un diol ou comprenant un diol, présentant au moins deux groupes hydroxyle et une masse moléculaire allant de 100 à moins de 500 g/mole, de préférence de 100 à 250 g/mole.

4. Procédé selon au moins l'une des revendications précédentes, dans lequel, à l'étape a), on met en oeuvre également un composé amine qui présente, en plus d'un groupe amino primaire et/ou secondaire, également au moins un autre groupe amino primaire et/ou secondaire ou au moins un groupe hydroxyle, le composé amine étant mis en oeuvre en un rapport en poids inférieur à 10 % en poids, par rapport à la somme du poids des polyols A et des polyols B.

5. Procédé selon au moins l'une des revendications précédentes, dans lequel
A = résidu hydrocarboné ayant 0 ou 1 à 3 atomes de C ;
B = résidu hydrocarboné ayant 0 ou 1 à 3 atomes de C ; et
C et D = résidu hydrocarboné ayant 0 ou 1 à 3 atomes de C.

6. Procédé selon au moins l'une des revendications précédentes, dans lequel la distance entre le groupe amine tertiaire et le groupe hydroxyle dans l'aminoalcool est respectivement de 2 à 6, de préférence de 2 ou 3 atomes de carbone et la distance entre au moins un groupe hydroxyle et le prochain groupe hydroxyle de l'aminoalcool dans la chaîne principale est de 2 à 5, de préférence de 2 ou 3 atomes de carbone.

7. Procédé selon au moins l'une des revendications précédentes, dans lequel l'isocyanate polyfonctionnel est un diisocyanate monomère ou un mélange de différents diisocyanates, de préférence un diisocyanate aliphatique ou cycloaliphatique.

8. Procédé selon au moins l'une des revendications précédentes, dans lequel les composés allongeurs de chaîne présentent au moins deux groupes amino primaire et le cas échéant, en plus, un groupe amino secondaire, et en particulier une éthylènediamine.

9. Procédé selon au moins l'une des revendications précédentes, dans lequel l'agent de quaternisation est au moins un acide mono- ou dicarboxylique ayant 1 à 6 atomes de carbone, de préférence l'acide acétique ;
et/ou
dans lequel le au moins un agent de quaternisation est mis en oeuvre en excédent molaire, de préférence en excédent de 1,2 à 2,5 fois, par rapport aux groupes amine tertiaire dans la chaîne latérale.

10. Procédé selon au moins l'une des revendications précédentes, dans lequel, à l'étape a), le solvant utilisé est un solvant qui bout en dessous de 100°C et peut être mélangé, indépendamment, de manière homogène en tout rapport avec de l'eau, est de préférence l'acétone et la méthyléthylcétone, et le solvant est de préférence éliminé après l'étape d).

11. Procédé selon au moins l'une des revendications précédentes, dans lequel, respectivement indépendamment les unes des autres,
la température de réaction de l'étape a) est de 50 à 100°C,
la température de réaction de l'étape b) est de 25 à 70°C, et
la température de réaction de l'étape c) est de 25 à 70°C,
la température de réaction de l'étape b) étant de préférence inférieure à celle de l'étape a) ;
et - également indépendamment de cela - la température à l'étape d) est de préférence inférieure à 40°C.

12. Procédé selon au moins l'une des revendications précédentes, dans lequel, indépendamment les unes des autres,
- la proportion de polyol A est supérieure à 60 % en poids, de préférence supérieure à 70 % en poids, de manière particulièrement préférée supérieure à 80 % en poids ;
- la proportion de polyol B est inférieure à 10 % en poids, est de préférence de 0,1 à 5 % en poids, de manière particulièrement préférée de 1 à 5 % en poids ;
- la proportion des aminoalcools est de 1 à 15 % en poids, de préférence de 4 à 12 % en poids ; et
- la proportion des allongeurs de chaîne est de 1 à 15 % en poids, de préférence de 4 à 12 % en poids ;
respectivement par rapport à la somme du polyol A, du polyol B, de l'aminoalcool et de l'allongeur de chaîne.

13. Procédé selon au moins l'une des revendications précédentes, dans lequel la fabrication des dispersions de polyuréthane cationiques stabilisées est réalisée de telle sorte que la réaction s'effectue jusqu'à la conversion de plus de 95 %, de manière particulièrement préférée de plus de 99 % de la somme des groupes hydroxyle et des groupes amine primaire ou secondaire avec les groupes isocyanate.

14. Dispersions de polyuréthane cationiques stabilisées pouvant être obtenues selon au moins l'une des revendications précédentes.

15. Dispersion de polyuréthane cationique stabilisée selon la revendication 14, **caractérisée en outre par** l'une ou plusieurs des caractéristiques suivantes,
a) présentant un pH de 3 à 7, de préférence de 4 à 6,5 ;
b) présentant une teneur en solides de 30 à 50 % en poids, déterminée d'après la norme DIN ISO 3251 ;
c) présentant une viscosité à 20°C de 10 à 600 mPas d'après la norme DIN ISO 976 ;
d) contenant en outre une dispersion d'acrylate et/ou une dispersion d'acétate de vinyle en un rapport en poids de 1 :9 à 9 :1 ;
e) présentant des diamètres moyens de particules de 25 à 120 nm, de préférence de 35 à 70 nm, déterminés par diffraction de la lumière dynamique.

16. Film pouvant être obtenu à partir de la dispersion de polyuréthane cationique stabilisée selon la revendication 14 ou 15, qui présente, après dépôt à 25°C et à une humidité relative de l'air de 80 % sur les surfaces du substrat et séchage en dessous de 80°C, une dureté au pendule selon König d'après la norme DIN 53157 supérieure à 30 sec, par rapport à une application d'une épaisseur de film humide de 90 µm et qui n'est pas collant.

17. Utilisation de la dispersion de polyuréthane selon la revendication 14 ou 15 dans des produits de revêtement aqueux, en particulier dans des produits de revêtement aqueux, de préférence non collants, à un seul composant, par exemple pour le papier, comme sous-couche barrière contre les ingrédients migrant vers la surface du bois et des matériaux en bois ou comme composant d'une laque anti-corrosion, en particulier d'une couche d'apprêt.
